# EUROPEAN PATENT SPECIFICATION

(11) **EP 3 643 568 B1**
(45) Date of publication and mention of the grant of the patent: **19.05.2021**
(21) Application number: 18202906.6
(22) Date of filing: 26.10.2018
(51) Int. Cl.: B60R 22/195

(54) **BELT PRETENSIONER FOR A SEATBELT DEVICE**
GURTSTRAFFER FÜR EINE SICHERHEITSGURTVORRICHTUNG
PRÉTENDEUR DE CEINTURE DE SÉCURITÉ POUR UN DISPOSITIF DE CEINTURE DE SÉCURITÉ

(43) Date of publication of application: 29.04.2020
(73) Proprietor: Autoliv Development AB, 447 83 Vårgårda (SE)
(72) Inventor: JO, Yong-Chan, Gyeonggi-do, 445-812 (KR); Ehlers, Jens, 25358 Horst (DE); LEGDE, Dietmar, 22457 Hamburg (DE)
(74) Representative: Müller Verweyen

(56) References cited:
- WO-A1-2017/005718
- CN-A- 101 402 347
- JP-A- 2008 213 550
- US-A1- 2003 122 362
- US-A1- 2013 299 620

## Description

The invention relates to a belt pretensioner for a seatbelt device having the features of the preamble of claim 1.

Belt pretensioners are use in general to pull possible belt slack out of a seatbelt in an early stage of an accident to couple the occupant closer to the vehicle deceleration. With coupling the occupant closer to the vehicle deceleration, it is possible to increase the displacement length in impact direction and to decrease the occupant load by using an energy absorption device with a lower restraining force level during the following restraining of the occupant.

One possible drive for belt pretensioners is a linear drive comprising a cable and a piston/cylinder unit, wherein the cable is connected with one end with the piston and with the other end either with an end bracket at which one end of the seatbelt is attached or also with a driving wheel of a retractor which drives a spindle in the retractor on which the other end of the seatbelt is wound on. Alternatively, the cable may be also attached to a buckle in which a tongue is lockable which is slidably guided on the seatbelt and divides the seatbelt to a 3-point geometry when locked in the buckle. The piston closes a pressure chamber in the cylinder which is filled with a pressurized gas generated by a gas generator when the belt pretensioner is activated. The piston is driven by the pressurized gas and pulls the cable in pretensioning direction to pretension the seatbelt. The gas generator is attached in a housing of the pretensioner having a cavity, a guidance for the cable and an attachment flange for the cylinder with the piston arranged therein. The cavity in the housing is the pressure chamber, which is loaded by the gas generated by the gas generator and is closed by the piston in the cylinder attached at the flange of the housing. The cable is attached with one end with the piston and runs further through the cavity and the guidance, in which the cable is guided to the outside of the housing.

Belt pretensioners comprising a linear drive with a piston/cylinder unit are known for example from one of the documents US 6,250,682 B1, US 5,897,140 A, WO 2017/032523 A1 or US 5,887,897 A.

To prevent unnecessary losses and to keep the performance of the belt pretensioner as high as possible it is provided a sealing between the cable and the housing. Furthermore, the gas generated by the gas generator is very hot and hits with a very strong impulse at the cable running in the cavity. Therefore, the cable in the cavity needs to be protected by an additional covering especially in the section close to the gas generator.

In the US 5,887,897 A both functions are realized by an annular shield of the housing extending into the cavity with a tubular sealing arranged therein. The shield extends nearly to the piston and covers the cable in the section where the generated gas hits from the gas generator into the cavity.

In the US 6,250,682 B1 the cable is also protected by an annular sleeve of the housing extending into the cavity. Furthermore, there is a sealing provided realized by an additional sleeve attached at the piston and extending between the annular sleeve of the housing and the cable.

In the WO 2017/032523 A1 the cable is protected by a guidance of the housing extending into the cavity with a sealing bushing arranged therein, wherein the sealing bushing comprises a sleeve and a sealing element. The sealing bushing is fixed by a plastic deformation of the sleeve pressing the sealing element onto the cable.

In all of these solutions the housing is provided with an integrated annular sleeve extending into the cavity. The sealings are arranged between the annular sleeve and the cable, so that both functions are realized in one single common section of the cable. The disadvantage of these solutions can be seen therein that the design of the housing is complex and the sealing needs to be designed also to withstand the load and temperature acting by the gas hitting onto the annular sleeve

Patent document JP 2008-213550A discloses a belt pretensioner according to the preamble of claim 1.

In view to this prior art it is the object of the invention to provide a generic belt pretensioner with a linear drive with an improved protection and sealing of the cable.

The object is solved by a belt pretensioner comprising the features of claim 1, while further preferred embodiments may be obtained from the figures and the related description.

According to the basic idea of the invention it is suggested, that the sealing is arranged in the guidance of the housing, and the shielding is realized by a bushing surrounding the cable, wherein the bushing abuts with its first face side, which is directed towards the guidance in axial direction at an abutment of the housing. The advantage of the invention can be seen therein, that the functions of sealing the cable and protecting the cable are realized at different sections of the cable, wherein the sealing for the cable is arranged in the housing and is not loaded by the generated pressurized gas anymore. Furthermore, the bushing is in a direct contact with the cable and abuts at an abutment of the housing in axial direction, so the bushing protects the cable directly and is fixed in its position at least when the pretensioning of the seatbelt starts. Furthermore, the bushing may not load the sealing in axial direction because the axial forces acting by the bushing are guided into the housing. Another advantage is that the sealing is secured by the bushing from moving out of the guidance. Furthermore, the housing does not need to be provided with an annular sleeve extending into the cavity, which facilitates the design of the housing and of the pretensioner in general.

Furthermore, the piston abuts preferably with its face side directed towards the cavity at a second face side of the bushing. The bushing is therefore fixed in the initial status between the housing and the piston. As the cavity extends from the housing to the piston the cable is completely covered and protected by the bushing in the section running through the cavity, so the cable got a maximum protection with respect to the hot pressurized gas of the gas generator.

It is further suggested that the bushing is made of aluminum. Aluminum is a very light material, which is easy to process, causes only small noises when the bushing gets in contact with the housing and is very absorbent versus heat and impacts.

Furthermore, the bushing is made of a tube, which is compressed onto or fitted with the cable. The bushing is therefore in a friction-locked connection with the cable. Another advantage is, that the bushing is in the closest contact as possible and the cable got a maximum protection by the contacting bushing. The gap formed between the bushing and the cable is minimized as possible and the cable got a maximum protection.

Furthermore, it is suggested that the bushing comprises at least one radial extending first flange, and the bushing abuts with the first flange at the abutment of the housing. The first flange provides an enlarged contact surface of the bushing at the abutment and improves the support of the bushing at the abutment.

The first flange can extend preferably in radial direction up to the inner surface of the cavity, so the bushing is also fixed in radial direction at the side facing towards the housing. Furthermore, the bushing comes into contact with a minimum gap in radial direction at the side facing towards the housing.

Furthermore, it is suggested that the first flange is ring-shaped and closes the guidance versus the cavity when abutting at the housing. The advantage of this preferred embodiment can be seen therein, that the bushing does not only protect the cable, it protects also the sealing arranged in the guidance indirectly from the pressurized gas by closing the guidance with the sealing arranged therein.

Furthermore, the bushing may comprise at the side facing towards the piston several radially extending second flanges, which are arranged in circumferential direction in distances to each other. The second flanges provide several advantages.

First of all, they reduce the volume of the cavity and the pressure in the cavity is increased more rapidly when the gas generator is activated which results in a higher efficiency of the pretensioner. The bushing protects the cable from the pressurized gas concentrated on the cavity at an early stage and the bushing moves toward the piston slower than the movement of the cable due to the friction between the pressurized gas and the cable. As the second flanges are arranged in distances to each other the pressurized gas may pass between the flanges onto the front side of the piston for driving the piston in the pretensioning direction. Furthermore, the second flanges limit the possible movement of the bushing in radial direction and reduce therefore the possible noises.

In an optimal embodiment the second flanges extend in radial direction up to the inner surface of the cavity, so they also fix the bushing at the side facing towards the piston in radial direction.

Furthermore, it is suggested, that the axial surface of the first flange facing to the pressurized gas in the cavity is bigger than the sum of the axial surfaces of the second flanges facing to the pressurized gas in the cavity. That is, the axial force is directed to the housing in the early stage of generation of pressurized gas and a final axial force acting on the bushing is always directed towards the piston when the bushing starts to move. The bushing is pressed towards the housing especially in the initial phase of the pretensioning process when the piston has not started the pretensioning movement.

In the following the invention shall be illustrated on the basis of preferred embodiments with reference to the accompanying drawings, wherein:
- Fig. 1: shows a belt pretensioner according to the invention; and
- Fig. 2: shows an enlarged view of the belt pretensioner and the bushing as a single part.

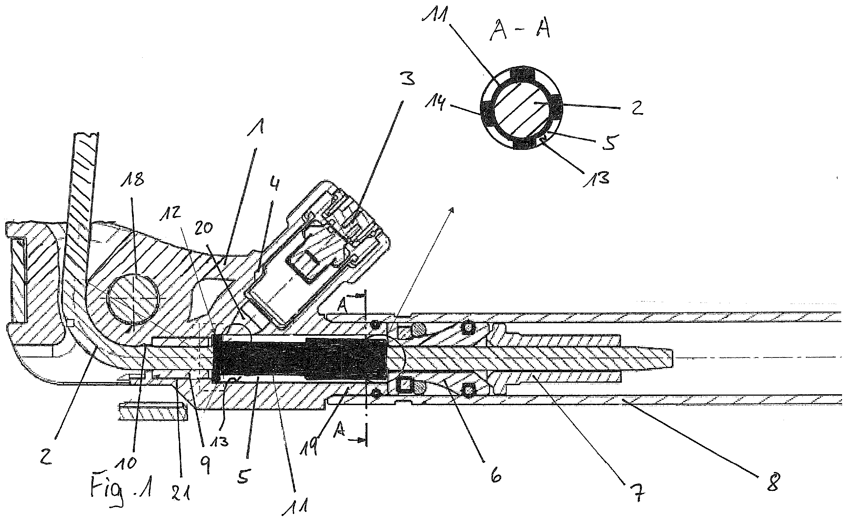

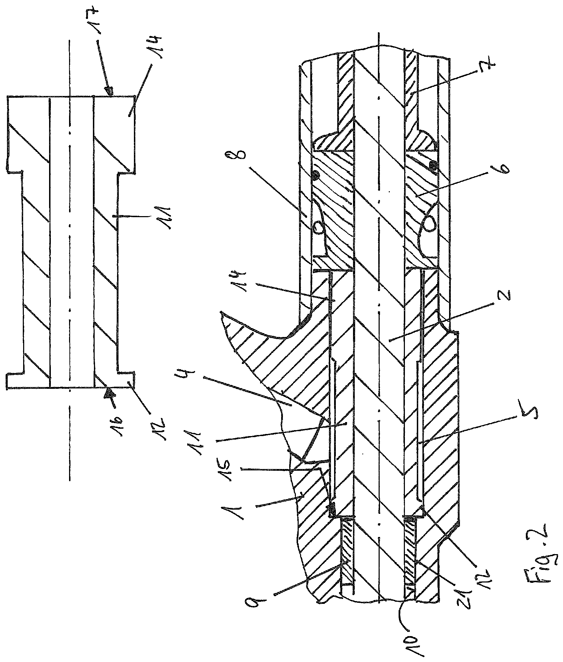

The belt pretensioner shown in the figures 1 and 2 comprises as a basic structural element a housing 1 which is made for example of a ZAMAK-alloy according to one of the European Standards EN 1774 or EN 12844 as a single part by sintering. The housing 1 comprises a fixation section 18 for fixing the belt pretensioner at a vehicle structure. Furthermore, the housing 1 further comprises a retainer 4 in which a gas generator 3 is attached, a cavity 5, a guidance 10 for a cable 2 and a ring-shaped attachment flange 19.

The cable 2 can be connected with the end extending upwards in figure 1 with a buckle, a bracket or with a retraction wheel of a retractor, which transfers the linear movement of the cable 2 to a rotational movement of the spindle of the retractor. The gas generator 3 is fixed in the retainer 4 for example by a crimping process of the outer rim section of the retainer 4.

The retainer 4 is a hollow tube-shaped section in the housing 1 and is provided with a fluid channel 20, for a fluid connection with the cavity 5. The guidance 10 comprises several sections with different geometries to guide the cable 2 out of the cavity 5 from a horizontal direction to a predetermined direction towards the seatbelt. The cavity 5 is formed as a hollow tube with a cylindrical inner surface 13. The cavity 5 is fluidically connected via the flow channel 20 with the retainer 4 and the gas generator 3 arranged therein, so that the hot pressurized gas generated by the gas generator 3 enters first in the flow channel 20 and flows further into the cavity 5 of the housing 1. At the attachment flange 19 of the housing 1 is attached a cylinder 8 of a piston/cylinder unit which is oriented co-axially to the cavity 5 in the housing 1 and is fluidically connected with the cavity 5, so that the pressurized gas may flow further from the cavity 5 into the cylinder 8.

The cable 2 is guided through the guidance 10 of the housing 1, runs further through the cavity 5 to the cylinder 8 and is connected at its end with a clamp 7. The guidance 10 in the housing 1 is designed in a section 21 close or adjacent to the cavity 5 with an enlarged diameter. In the section 21 is arranged a sealing 9 which tightens the gap between the cable 2 and the guidance 10. The cavity 5 comprises a bigger diameter than the guidance 10 in the section 21, so that the housing 1 is provided with an abutment 15 formed as a step at the side of the cavity 5 facing towards the sealing 9 like shown in figure 2.

Furthermore a bushing 11 is provided which is made of aluminum and compressed with the cable 2. The bushing 11 shields the section of the cable 2 which runs in the cavity 5, so that the cable 2 is not exposed to the hot pressurized gas generated by the gas generator 3. Between the bushing 11 and the clamp 7 is arranged a piston 6 of the piston/cylinder unit, which closes the cavity 5 in the housing 1 at the free end of the attachment flange 19.

The bushing 11 comprises at the side facing towards the sealing 9 a radial extending first flange 12 which comprises a radial outer diameter which is equal to or slightly smaller than the inner diameter of the cavity 5, so that the bushing 11 abuts at the abutment 15 of the cavity 5 and does not load the sealing 9 in the guidance 10 of the housing 1. Furthermore, the bushing 11 comprises at the side facing towards the piston 6 four radially extending second flanges 14, which are distanced in circumferential direction like shown in the cross-section A-A in figure 2. The bushing 11 extends from the abutment 15 to the piston 6 and covers the cable 2 in the cavity 5 in the initial status before the pretensioner is activated completely.

The first and second flanges 12 and 14 may be dimensioned to extend in radial direction up to the inner surface 13 of the cavity 5 so that they prevent or reduce radial movements of the bushing 11 and the cable 2 in the section of the cavity 5. The axial surface directed towards the inner side of the cavity of the first flange 12 is dimensioned bigger than the sum of axial surfaces of the second flanges 14, which may be achieved by dimensioning the first flange 12 with a bigger outer diameter or easily by the distances between the second flanges 14 in circumferential direction.

When the belt pretensioner is activated the gas generator 3 is ignited in a first step and releases therefore a high volume of hot pressurized gas within a very short time which flows through the flow channel 20 into the cavity 5. This high volume of released gas results to a very quick increase of the pressure in the cavity 5. As the first flange 12 is dimensioned having a bigger axial surface than the sum of the second flanges 14 the bushing 11 is pressed at the beginning towards the abutment 15. Furthermore, the second flanges 14 reduce the free volume of the cavity 5 and the increasing pressure in the cavity 5 reaches earlier a predetermined level compared to a bushing 11 with the same dimensions having no second flanges 14. Because of the distances between the second flanges 14 the pressurized gas flows further between the second flanges 14 and loads also the face-side of the piston 6 which closes the cavity 5. When the increasing pressure exceeds a defined level the piston 6 is pushed into the cylinder 8 and pulls the cable 2 therefore together with the bushing 11 into the cylinder 8 with pretensioning the seatbelt.

The advantage of the suggested design is that the sealing 9 and the bushing 11 are in contact with different sections of the cable 2. Furthermore, the sealing 9 is located outside of the cavity 5 and is therefore not loaded by the hot pressurized gas. Furthermore, the section of the cable 2 running in the cavity 5 is protected directly by the bushing 11 without a sealing arranged between like in the embodiments known from the prior art. If the first flange 12 is designed as a ring, it is possible to tighten the guidance 10 of the housing 1 in the initial phase of the activation of the gas generator 3 with respect to the cavity 5 until the piston 6 and the cable 2 start the pretensioning movement together with the bushing 11. The sealing 9 may be therefore protected versus the hot pressurized gas and also versus mechanical loads by the bushing 11 abutting at the abutment 15.

## Claims

1. Belt pretensioner with a linear drive comprising
- a housing (1) with a cavity (5), and
- a gas generator (3) fixed in the housing (1), which loads the cavity (5) with a pressurized gas when activated, and
- a cable (2), which runs through the cavity (5) and is guided in a guidance (10) arranged in the housing (1) and
- a piston/cylinder unit, wherein
- the piston/cylinder unit is attached at the housing (1) and closes the cavity (5) in the housing (1), wherein
- the cable (2) is connected with one end with the piston (6) and with the other end with one part of a seatbelt device, wherein
- a sealing (9) is provided which is arranged between the cable (2) and the housing (1), wherein
- the cable (2) is protected at least partially in the section running through the cavity (5) by a shielding, wherein
- the sealing (9) is arranged in the guidance (10) of the housing (1), and
- the shielding is realized by a bushing (11) surrounding the cable (2), **characterized in that**:
- the bushing (11) abuts with its first face side, which is directed towards the guidance (10) in axial direction at an abutment (15) of the housing (1).

2. Belt pretensioner according to claim 1, **characterized in that**
- the piston (6) abuts with its face side directed towards the cavity (5) at a second face side of the bushing (11).

3. Belt pretensioner according to one of the preceding claims, **characterized in that**
- the bushing (11) is made of aluminum.

4. Belt pretensioner according to one of the preceding claims, **characterized in that**
- the bushing (11) is made of a tube, which is compressed onto or fitted with the cable (2).

5. Belt pretensioner according to one of the preceding claims, **characterized in that**
- the bushing (11) comprises at least one radially extending first flange (12), and
- the bushing (11) abuts with the first flange (12) at the abutment (15) of the housing (1).

6. Belt pretensioner according to claim 5, **characterized in that**
- the first flange (12) extends in radial direction up to the inner surface (13) of the cavity (5).

7. Belt pretensioner according to claim 5 or 6, **characterized in that**
- the first flange (12) is ring-shaped and closes the guidance (10) versus the cavity (5) when abutting at the housing.

8. Belt pretensioner according to one of the preceding claims, **characterized in that**
- the bushing (11) comprises at the side facing towards the piston (6) several radially extending second flanges (14), which are arranged in circumferential direction in distances to each other.

9. Belt pretensioner according to claim 8, **characterized in that**
- the second flanges (14) extend in radial direction up to the inner surface (13) of the cavity (5).

10. Belt pretensioner according to one of the claims 8 or 9, **characterized in that**
- the second flanges are at least sectionally in contact with each other in circumferential direction.

11. Belt pretensioner according to one of the claims 5 to 7 and according to claim 8, 9 or 10, characterized in that-the axial surface of the first flange (12) facing to the pressurized gas in the cavity (5) is bigger than the sum of the axial surfaces of the second flanges (14) facing to the pressurized gas in the cavity (5).

## Patentansprüche

1. Gurtstraffer mit einem Linearantrieb, der Folgendes umfasst:
- ein Gehäuse (1) mit einem Hohlraum (5) und
- einen Gasgenerator (3), der in dem Gehäuse (1) angebracht ist, der den Hohlraum (5) mit einem Druckgas füllt, wenn er aktiviert wird, und
- ein Kabel (2), das durch den Hohlraum (5) verläuft und in einer Führung (10) geführt ist, die in dem Gehäuse (1) angeordnet ist, und
- eine Kolben/Zylinder-Einheit, wobei
- die Kolben/Zylinder-Einheit an dem Gehäuse (1) befestigt ist und den Hohlraum (5) in dem Gehäuse (1) schließt, wobei
- das Kabel (2) mit einem Ende mit dem Kolben (6) und mit dem anderen Ende mit einem Teil einer Sicherheitsgurtvorrichtung verbunden ist, wobei
- eine Dichtung (9) bereitgestellt ist, die zwischen dem Kabel (2) und dem Gehäuse (1) angeordnet ist, wobei
- das Kabel (2) wenigstens teilweise durch eine Abschirmung in dem Abschnitt geschützt ist, der durch den Hohlraum (5) verläuft, wobei
- die Dichtung (9) in der Führung (10) des Gehäuses (1) angeordnet ist und
- die Abschirmung durch eine Hülse (11) umgesetzt ist, die das Kabel (2) umgibt, **dadurch gekennzeichnet, dass**:
- die Hülse (11) mit ihrer ersten Flächenseite, die zu der Führung (10) hin gerichtet ist, in axialer Richtung an einem Widerlager (15) des Gehäuses (1) anstößt.

2. Gurtstraffer nach Anspruch 1, **dadurch gekennzeichnet, dass**
- der Kolben (6) mit seiner Flächenseite, die zu dem Hohlraum (5) hin gerichtet ist, an einer zweiten Flächenseite der Hülse (11) anstößt.

3. Gurtstraffer nach einem der vorhergehenden Ansprüche, **dadurch gekennzeichnet, dass**
- die Hülse (11) aus Aluminium gefertigt ist.

4. Gurtstraffer nach einem der vorhergehenden Ansprüche, **dadurch gekennzeichnet, dass**
- die Hülse (11) aus einem Rohr gefertigt ist, das auf das Kabel (2) gepresst oder mit diesem ausgestattet ist.

5. Gurtstraffer nach einem der vorhergehenden Ansprüche, **dadurch gekennzeichnet, dass**
- die Hülse (11) wenigstens einen sich radial erstreckenden ersten Flansch (12) umfasst und
- die Hülse (11) mit dem ersten Flansch (12) an dem Widerlager (15) des Gehäuses (1) anstößt.

6. Gurtstraffer nach Anspruch 5, **dadurch gekennzeichnet, dass**
- der erste Flansch (12) sich in radialer Richtung bis zu der Innenoberfläche (13) des Hohlraums (5) nach oben erstreckt.

7. Gurtstraffer nach Anspruch 5 oder 6, **dadurch gekennzeichnet, dass**
- der erste Flansch (12) ringförmig ist und die Führung (10) gegenüber dem Hohlraum (5) schließt, wenn er an dem Gehäuse anstößt.

8. Gurtstraffer nach einem der vorhergehenden Ansprüche, **dadurch gekennzeichnet, dass**
- die Hülse (11) an der Seite, die dem Kolben (6) zugewandt ist, mehrere sich radial erstreckende zweite Flansche (14) umfasst, die in Umfangsrichtung in Abständen zueinander angeordnet sind.

9. Gurtstraffer nach Anspruch 8, **dadurch gekennzeichnet, dass**
- die zweiten Flansche (14) sich in radialer Richtung bis zu der Innenoberfläche (13) des Hohlraums (5) nach oben erstrecken.

10. Gurtstraffer nach einem der Ansprüche 8 oder 9, **dadurch gekennzeichnet, dass**
- sich die zweiten Flansche in Umfangsrichtung wenigstens abschnittsweise berühren.

11. Gurtstraffer nach einem der Ansprüche 5 bis 7 und nach Anspruch 8, 9 oder 10, **dadurch gekennzeichnet, dass** die axiale Oberfläche des ersten Flansches (12), die dem Druckgas in dem Hohlraum (5) zugewandt ist, größer ist als die Summe der axialen Oberflächen der zweiten Flansche (14), die dem Druckgas in dem Hohlraum (5) zugewandt sind.

## Revendications

1. Prétendeur de ceinture de sécurité à entraînement linéaire comprenant
- un boîtier (1) avec une cavité (5), et
- un générateur de gaz (3) fixé dans le boîtier (1), qui charge la cavité (5) d'un gaz sous pression lorsqu'il est activé, et
- un câble (2), qui traverse la cavité (5) et est guidé dans un guidage (10) disposé dans le boîtier (1) et
- une unité piston/cylindre, dans lequel
- l'unité piston/cylindre est attachée au boîtier (1) et ferme la cavité (5) dans le boîtier (1), dans lequel
- le câble (2) est relié à une extrémité au piston (6) et à l'autre extrémité à une partie d'un dispositif de ceinture de sécurité, dans lequel
- un blocage (9) est prévu qui est disposé entre le câble (2) et le boîtier (1), dans lequel
- le câble (2) est protégé au moins partiellement dans la section traversant la cavité (5) par un blindage, dans lequel
- le blocage (9) est disposé dans le guidage (10) du boîtier (1), et
- le blindage est réalisé par une douille (11) entourant le câble (2), **caractérisé en ce que** :
- la douille (11) vient en butée avec son premier côté de face, qui est dirigé vers le guidage (10) dans une direction axiale au niveau d'une butée (15) du boîtier (1).

2. Prétendeur de ceinture de sécurité selon la revendication 1, **caractérisé en ce que**
- le piston (6) vient en butée avec son côté de face dirigé vers la cavité (5) au niveau d'un second côté de face de la douille (11).

3. Prétendeur de ceinture de sécurité selon l'une des revendications précédentes, **caractérisé en ce que**
- la douille (11) est en aluminium.

4. Prétendeur de ceinture de sécurité selon l'une des revendications précédentes, **caractérisé en ce que**
- la douille (11) est constituée d'un tube qui est comprimé sur, ou ajusté avec, le câble (2).

5. Prétendeur de ceinture de sécurité selon l'une des revendications précédentes, **caractérisé en ce que**
- la douille (11) comprend au moins une première bride (12) s'étendant radialement, et
- la douille (11) vient en butée avec la première bride (12) au niveau de la butée (15) du boîtier (1).

6. Prétendeur de ceinture de sécurité selon la revendication 5, **caractérisé en ce que**
- la première bride (12) s'étend dans une direction radiale jusqu'à la surface intérieure (13) de la cavité (5).

7. Prétendeur de ceinture de sécurité selon la revendication 5 ou 6, **caractérisé en ce que**
- la première bride (12) est de forme annulaire et ferme le guidage (10) par rapport à la cavité (5) lorsqu'elle vient en butée contre le boîtier.

8. Prétendeur de ceinture de sécurité selon l'une des revendications précédentes, **caractérisé en ce que**
- la douille (11) comprend du côté orienté vers le piston (6) plusieurs secondes brides (14) s'étendant radialement, qui sont disposées dans une direction circonférentielle à distance les unes des autres.

9. Prétendeur de ceinture de sécurité selon la revendication 8, **caractérisé en ce que**
- les secondes brides (14) s'étendent dans une direction radiale jusqu'à la surface intérieure (13) de la cavité (5).

10. Prétendeur de ceinture de sécurité selon l'une des revendications 8 ou 9, **caractérisé en ce que**
- les secondes brides sont en contact, au moins au niveau de certaines sections, les unes avec les autres dans une direction circonférentielle.

11. Prétendeur de ceinture de sécurité selon l'une des revendications 5 à 7 et selon la revendication 8, 9 ou 10, **caractérisé en ce que** la surface axiale de la première bride (12) faisant face au gaz sous pression dans la cavité (5) est plus grande que la somme des surfaces axiales des secondes brides (14) faisant face au gaz sous pression dans la cavité (5).
